Europäisches Patentamt

European Patent Office

Office européen des brevets

(19)

(11) **EP 0 948 995 B1**

(12) **FASCICULE DE BREVET EUROPEEN**

(45) Date de publication et mention
de la délivrance du brevet:
**16.11.2005 Bulletin 2005/46**

(51) Int Cl.⁷: **B01J 20/06**, B01D 53/68,
B01D 15/00

(21) Numéro de dépôt: **99400704.5**

(22) Date de dépôt: **23.03.1999**

(54) **Procédé d'élimination de composés halogénés contenus dans un gaz ou un liquide avec une composition à base d'au moins un élement métallique**

Verfahren zur Entfernung von halogenierten Verbindungen aus einem Gas oder einer Flüssigkeit mittels einer zumindest ein metallisches Element enthaltenden Zusammenstellung

Process for removing halogenated compounds from a gas or a liquid with at least one metallic element-containing composition

(84) Etats contractants désignés:
**AT BE CH CY DE DK ES FI FR GB GR IE IT LI LU MC NL PT SE**

(30) Priorité: **31.03.1998 FR 9803969**

(43) Date de publication de la demande:
**13.10.1999 Bulletin 1999/41**

(73) Titulaire: **Institut Français du Pétrole
92852 Rueil-Malmaison Cedex (FR)**

(72) Inventeur: **Nedez, Christophe
30340 Salindres (FR)**

(56) Documents cités:
**EP-A- 0 546 464** **US-A- 4 036 940**
**US-A- 4 594 231** **US-A- 4 639 259**
**US-A- 5 688 479**

• **PATENT ABSTRACTS OF JAPAN vol. 098, no. 001, 30 janvier 1998 & JP 09 225296 A (TOYO C C I KK;JAPAN ENERGY CORP), 2 septembre 1997**

Remarques:
Le dossier contient des informations techniques présentées postérieurement au dépôt de la demande et ne figurant pas dans le présent fascicule.

## Description

La présente invention est relative à un procédé pour éliminer les composés halogénés, et plus particulièrement les composés chlorés, contenus dans un gaz ou un liquide.

Dans un certain nombre d'applications industrielles, il est nécessaire d'éliminer les composés halogénés, notamment les composés chlorés, contaminant le flux, qu'il soit gazeux ou liquide.

Un exemple illustratif est l'élimination de composés halogénés, notamment de composés chlorés, contenus dans le gaz ou le liquide provenant du réformage catalytique, dans l'industrie pétrolière.

Un des buts du réformage catalytique est d'obtenir des hydrocarbures présentant un indice d'octane accru. Il est établi que l'indice d'octane d'un hydrocarbure est d'autant plus grand qu'il est ramifié, cyclique voire aromatique. Ainsi, les réactions de cyclisation et d'aromatisation des hydrocarbures seront favorisées.

Habituellement, ces réactions de cyclisation et d'aromatisation d'hydrocarbures ont lieu en présence de catalyseurs hétérogènes bimétalliques chlorés. Ces catalyseurs chlorés sont à base d'alumine et comportent, le plus souvent, du platine et un autre métal tel que par exemple l'étain, le rhénium, ou l'iridium. La présence de chlore dans lesdits catalyseurs est importante car, ajouté à l'alumine, il assure l'acidité globale du système et participe à la redispersion du platine au cours du temps, permettant ainsi de stabiliser l'activité catalytique du catalyseur.

Cependant, l'ajout de chlore n'est pas une solution sans inconvénient. En effet, au cours du temps, une élution du chlore, notamment sous forme d'HCl, est constatée. Cette élution se traduit d'abord par la nécessité constante de recharger le catalyseur en chlore. Elle conduit également à la présence d'HCl et d'autres composés chlorés dans les effluents gazeux et liquides issus du réformage catalytique, ce qui pourra conduire, d'une part, à un problème de corrosion de l'installation, et d'autre part, à la formation d'autres produits indésirables et nuisibles au fonctionnement des unités placées en aval.

Le réformage catalytique produit également de l'hydrogène. Dans le raffinage du pétrole, l'hydrogène est un produit particulièrement précieux, notamment par son utilisation dans les hydrotraitements qui sont de plus en plus développés dans le but d'améliorer la protection de l'environnement.

En sortie de réformage catalytique traditionnel, qui fonctionne sous une pression d'environ 20 bar voire au-delà, les effluents gazeux sont majoritairement composés d'hydrogène, d'hydrocarbures légers comme le méthane, l'éthane..., et présentent en général des traces d'HCl et d'eau. Il est donc important de pouvoir éliminer toutes traces d'HCl de ces effluents, et ensuite de recycler et donc d'utiliser l'hydrogène purifié, toujours en raffinerie.

Par ailleurs, des procédés régénératifs, ou de nouvelle génération, ont récemment été mis au point et se développent de plus en plus sur le terrain. Ces procédés fonctionnent sous une pression voisine de 3 à 15 bar, voire inférieure.

En sortie d'un réformage catalytique régénératif, en plus de l'hydrogène, des hydrocarbures légers, des traces d'HCl et d'eau, des traces d'hydrocarbures insaturés comme l'éthylène, le propylène, le butène, le butadiène... ont été détectées. Ces hydrocarbures insaturés, en présence de chlore et au contact avec l'alumine se transforment au moins partiellement en composés organochlorés, qui à leurs tours, après de multiples réactions avec d'autres composés organochlorés et/ou insaturés conduisent à des oligomères de masses moléculaires élevées appelés "huiles vertes" ou "green oils". Ces "huiles vertes" peuvent entraîner des bouchages de l'installation. Dès lors, une baisse significative de la durée de vie de l'adsorbant est notée : dans certains cas, une baisse de 4 à 5 fois a été observée.

Dans ce type de procédé, il est important de pouvoir éliminer, d'une part, toutes traces d'HCl de ces effluents pour pouvoir recycler et donc d'utiliser l'hydrogène purifié, et d'autre part, réduire voire supprimer la formation des "huiles vertes".

Le but de la présente invention est de proposer un procédé amélioré pour l'élimination efficace de composés halogénés en général, des composés chlorés en particulier, et de l'HCl plus particulièrement, contenus dans un gaz ou un liquide.

Un autre but de la présente invention est de proposer un procédé mettant en oeuvre une composition qui réduira substantiellement, voire supprimera, la formation des oligomères halogénés, et en particulier des oligomères chlorés appelés "huiles vertes" ou "green oils", en aval des procédés de réformage régénératif ou de nouvelle génération.

Ces buts sont atteints par la présente invention qui a pour objet un procédé d'élimination de composés halogénés contenus dans un gaz ou un liquide.

Dans tout ce qui va suivre, par "le procédé d'élimination de composés halogénés", on entend "le procédé d'élimination, de réduction et/ou de suppression de la formation des composés organiques, inorganiques, ainsi que les oligomères de masses élevées, halogénés."

Ainsi, la présente invention a pour objet un procédé d'élimination de composés halogénés contenus dans un gaz ou dans un liquide, caractérisé en ce que l'on met en contact le gaz ou le liquide avec une composition à base d'une alumine et/ou un hydrate d'alumine et d'au moins un composé (A) comprenant au moins un élément métallique choisi parmi les métaux des groupes VIII, IB, et/ou IIB de la Classification Périodique, et en ce que la teneur globale massique en élément(s) métallique(s) est d'au plus 45 % en poids par rapport au poids total de la composition.

De manière plus particulière, le complément en poids de la composition comprend en majeure partie de l'alumine et/ou de l'hydrate d'alumine.

Pour l'ensemble de l'exposé, la Classification Périodique est celle du "Supplément au Bulletin de la Société Chimique de France, No. 1, janvier 1966."

La composition mise en oeuvre dans le procédé, objet de la présente invention, peut se présenter sous la forme de poudres, de billes, d'extrudés, de concassés, ou de monolithes.

Le premier constituant essentiel de la composition est l'alumine, un hydrate d'alumine, ou un mélange d'alumine et d'hydrate d'alumine.

L'alumine de départ utilisée présente, une surface spécifique d'au moins 30 m$^2$/g.

Dans la présente invention, toutes les surfaces spécifiques indiquées sont des surfaces mesurées par la méthode BET. On entend par surface mesurée par la méthode BET, la surface spécifique déterminée par adsorption d'azote conformément à la norme ASTM D 3663-78 établie à partir de la méthode BRAUNER-EMMETT-TELLER décrite dans " The Journal of the American Chemical Society", 60, 309 (1938).

Cette alumine de départ peut présenter également, un volume poreux total (VPT) d'au moins 0,10 cm$^3$/g, de préférence d'au moins 0,20 cm$^3$/g, encore plus préférentiellement d'au moins 0,25 cm$^3$/g. Ce volume poreux total est mesuré de la façon suivante : on détermine la valeur de la densité de grain et de la densité absolue : les densités de grain (Dg) et absolue (Da) sont mesurées par la méthode de picnométrie respectivement au mercure et à l'hélium, le VPT est donné par la formule :

$$[1/Dg] - [1/Da]$$

Les procédés de préparation des alumines présentant les caractéristiques de volume poreux total et de surface spécifique nécessaires à la mise en oeuvre du procédé selon l'invention sont connus de l'homme du métier.

En ce qui concerne l'alumine, la poudre d'alumine utilisée comme matière de départ pour la préparation de la composition selon l'invention, peut être obtenue par des procédés classiques tels que le procédé par précipitation ou gel, et le procédé par déshydratation rapide d'un hydroxyde d'alumine (ou hydrate d'alumine) tel que l'hydrate de Bayer (hydrargillite). Cette dernière alumine est celle préférée de l'invention.

S'il s'agit de billes d'alumine, elles peuvent être issues d'une mise en forme par coagulation en gouttes. Ce type de billes peut par exemple être préparé selon l'enseignement des brevets EP-A-0 015 801 ou EP-A-0 097 539. Le contrôle de la porosité peut être réalisé en particulier selon le procédé décrit dans le brevet EP-A-0 097 539 par coagulation en gouttes d'une suspension ou d'une dispersion aqueuse d'alumine ou d'une solution d'un sel basique d'aluminium se présentant sous forme d'une émulsion constituée d'une phase organique, d'une phase aqueuse et d'un agent de surface ou d'un émulsionnant. Ladite phase organique peut en particulier être un hydrocarbure, l'agent surfactant ou émulsionnant est par exemple du Galoryl EM 10®.

L'alumine en forme de billes peut être aussi obtenue par agglomération d'une poudre d'alumine. L'agglomération en forme de billes s'effectue directement sur la poudre d'alumine par technologie tournante. On entend par technologie tournante tout appareil dans lequel l'agglomération s'effectue par mise en contact et rotation du produit à granuler sur lui-même. Comme appareil de ce type, on peut citer le drageoir tournant, le tambour tournant. Ce type de procédé permet d'obtenir des billes de dimensions et de répartitions de pores contrôlées, ces dimensions et ces répartitions étant, en général, créées pendant l'étape d'agglomération. Le contrôle des volumes des pores de diamètre donné peut également être réalisé au cours de cette étape d'agglomération par un réglage adéquat du débit d'introduction de la poudre d'alumine et éventuellement d'eau, de la vitesse de rotation de l'appareil ou lors de l'introduction d'une amorce de mise en forme.

Les extrudés d'alumine peuvent être obtenus par malaxage puis extrusion d'une matière à base d'alumine, ladite matière pouvant être issue de la déshydratation rapide d'hydrargillite ou de la précipitation d'un gel d'alumine. Le contrôle de la porosité des extrudés peut être réalisé par les conditions opératoires de malaxage de cette alumine avant extrusion. L'alumine peut aussi être mélangée lors du malaxage à des porogènes. A titre d'exemple, les extrudés peuvent être préparés par le procédé décrit dans le brevet US-A-3.856.708.

Les concassés d'alumine peuvent être issus du concassage de tout type de matière à base d'alumine telle que, par exemple, des billes obtenues par tout type de procédé (coagulation en gouttes, drageoir ou tambour tournant) ou des extrudés. Le contrôle de la porosité de ces concassés peut se faire par le choix de la matière à base d'alumine que l'on concasse pour les obtenir.

Quelle que soit la forme de l'alumine, la porosité peut être créée par différents moyens comme le choix de la granulométrie de la poudre d'alumine ou le mélange de plusieurs poudres d'alumine de différentes granulométries. Une autre méthode consiste à mélanger à la poudre d'alumine, avant ou pendant les étapes d'agglomération ou d'extrusion, un composé, appelé porogène, disparaissant totalement par chauffage et créant ainsi une porosité dans l'alumine.

Comme composés porogènes utilisés, on peut citer, à titre d'exemple, la farine de bois, le charbon de bois, le soufre, des goudrons, des matières plastiques ou émulsions de matières plastiques telles que le polychlorure de vinyle, des alcools polyvinyliques, la naphtaline ou analogues. La quantité de composés porogènes ajoutés n'est pas critique et est déterminée par le volume poreux désiré.

Suite à sa mise en forme, l'alumine obtenue peut être soumise à différentes opérations destinées à améliorer leur résistance mécanique telles qu'un mûrissement par maintien dans une atmosphère à taux d'humidité contrôlée, suivi d'une calcination puis d'une imprégnation de l'alumine par une solution d'un ou plusieurs acides et un traitement hydrothermal en atmosphère confinée.

Enfin, après ces différents traitements, l'alumine peut être séchée puis éventuellement calcinée.

Comme indiqué plus haut, l'alumine utilisée comme matière de départ pour la préparation de la composition selon l'invention, peut être obtenue notamment par déshydratation rapide d'un hydrate d'alumine tel que l'hydrate de Bayer (hydrargillite).

Cet hydrate d'alumine peut également être directement utilisé comme matière de départ pour la préparation de la composition selon l'invention. Avantageusement, l'hydrate d'alumine est de l'hydrargillite.

Lorsque la matière de départ est l'hydrate d'alumine, un liant peut être ajouté à la composition pour assurer des propriétés mécaniques satisfaisantes à l'ensemble. A titre d'exemple, les liants peuvent être à base d'argile comme l'attapulgite, la kaolinite, ou la bentonite.

Dans le cadre de la présente invention, l'hydrate d'alumine peut avoir une surface spécifique supérieure à 5 $m^2/g$, et de préférence supérieure à 10 $m^2/g$. Il peut également présenter un volume poreux total (VPT) d'au moins 0,10 $cm^3/g$.

L'hydrate d'alumine peut se caractériser également par sa perte au feu (PAF), mesuré à 300°C, qui est avantageusement supérieure à 5 %, voire supérieure à 10 %.

La perte au feu (PAF) est déterminée conformément à la norme Afnor : NF T20-203 d'octobre 1973 - EQV ISO 803.

Les différents procédés de mise en forme décrits précédemment pour l'alumine, s'appliquent également à l'hydrate d'alumine.

Un mélange d'alumine et d'hydrate d'alumine peut également être employé.

Le deuxième constituant de la composition est l'élément dopant, plus précisément l'élément métallique, apporté par le composé (A).

La composition mise en oeuvre dans le procédé de l'invention, peut comporter un ou plusieurs éléments métalliques choisi parmi les métaux des groupes VIII, IB, et/ou IIB de la Classification Périodique.

L'introduction de l'élément métallique, sur ou dans l'alumine et/ou l'hydrate d'alumine, peut être réalisée par toute méthode connue de l'homme du métier. Cette introduction se fera de préférence par un dépôt de ou des élément (s) métallique(s) sur l'alumine et/ou hydrate d'alumine.

L'introduction de l'élément métallique peut être réalisée, par exemple, par imprégnation de l'alumine et/ou l'hydrate d'alumine déjà préparée avec au moins un composé (A) comprenant au moins un élément métallique, ou par mélange d'au moins un composé (A) comprenant au moins un élément métallique avec l'alumine et/ou l'hydrate d'alumine en aval ou au cours de la mise en forme de cette dernière.

L'introduction de l'élément dopant dans l'alumine et/ou l'hydrate d'alumine peut être également réalisée par coprécipitation de l'alumine et/ou l'hydrate d'alumine et au moins un composé (A) comprenant au moins un élément métallique.

Dans le cas d'une introduction par imprégnation, celle-ci peut se faire de manière connue par mise en contact de l'alumine et/ou l'hydrate d'alumine avec une solution, un sol ou un gel comprenant au moins un élément dopant sous forme d'oxyde ou de sel ou d'un de leurs précurseurs.

L'opération est réalisée en général par trempage de l'alumine et/ou l'hydrate d'alumine dans un volume déterminé de solution d'au moins un précurseur d'au moins un élément dopant. Par solution d'un précurseur d'un élément dopant, on entend une solution d'au moins un sel ou d'au moins un composé de l'élément ou des éléments dopants, ces sels et composés étant thermiquement décomposables.

La concentration en sel de la solution est choisie en fonction de l'élément dopant à introduire dans l'alumine et/ou l'hydrate d'alumine ainsi que de la teneur finale en dopant désirée.

La surface d'imprégnation de l'élément dopant est déterminée par le volume de solution adsorbé. Ainsi, le volume adsorbé de l'élément dopant est égal au volume poreux total de l'alumine et/ou l'hydrate d'alumine à imprégner. Il est également possible d'imprégner l'alumine et/ou l'hydrate d'alumine par trempage de celle-ci dans la solution de précurseur d'élément dopant et d'éliminer l'excès de solution par égouttage.

Selon un mode préféré, l'élément dopant est introduit par imprégnation à sec, c'est-à-dire que l'imprégnation est faite avec juste le volume de solution nécessaire à ladite imprégnation, sans excès.

Les composés (A) servant à introduire dans l'alumine et/ou l'hydrate d'alumine au moins un élément métallique choisi parmi les métaux des groupes VIII, IB, et/ou IIB de la Classification Périodique, peuvent être choisis parmi les composés organiques ou inorganiques. Ils sont choisis de préférence parmi les composés inorganiques.

Par composés inorganiques, on désigne plus particulièrement les sels inorganiques tels que par exemple les carbonates, les bicarbonates, les cyanures, les cyanates, les alcoxylates, les hydroxydes, les sulfates, et les nitrates.

Comme mentionné précédemment, lesdits composés comprennent au moins un élément métallique choisi parmi les métaux :

- du groupe VIII : le fer et le nickel,
- du groupe IB : le cuivre, et
- du groupe IIB : le zinc.

Les composés (A) sont choisis, de préférence, parmi les nitrates, les sulfates, les hydroxydes, les carbonates, et les bicarbonates, de fer, de nickel, de cuivre, de zinc, seuls ou en mélange.

La composition utilisée dans le procédé selon l'invention est obtenue en soumettant l'alumine et/ou l'hydrate d'alumine, après l'introduction du ou des composés (A), à un traitement thermique. Le traitement thermique est réalisé à une température déterminée en fonction de la nature de l'élément ou des éléments dopants.

On utilise une alumine et/ou un hydrate d'alumine, qui, après l'introduction d'au moins un composé (A) comprenant au moins un élément métallique précité, peut être traité thermiquement à une température d'au moins 100°C. Ce traitement thermique peut être effectué de préférence à une température comprise entre 150°C et 600°C, et encore plus préférentiellement entre 200°C et 550°C.

La durée du traitement thermique n'est pas en soi critique. Elle dépendra de la température : généralement, plus la température est élevée, moindre sera la durée du traitement.

Lors de l'introduction du ou des composé(s) (A), la concentration de la solution en composé est choisie de telle manière que la teneur globale massique de l'élément ou des éléments métalliques soit d'au plus 35 % en poids, et plus particulièrement d'au plus 25 % en poids par rapport au poids total de la composition.

Cette teneur est d'au moins 0,005 % (50 ppm) en poids, et de préférence d'au moins 0,5 % en poids par rapport au poids total de la composition, l'élément métallique n'étant pas le fer.

Dans le cas où l'un au moins des éléments métalliques est le fer, la teneur globale massique en fer est d'au moins 0,1% en poids, de préférence d'au moins 0,5 % en poids, et encore plus préférentiellement d'au moins 0,7 % en poids par rapport au poids total de la composition.

La teneur globale massique de l'élément ou des éléments métalliques est tout particulièrement incluse entre 0,5 % et 20 % en poids, et plus particulièrement comprise entre 0,7 et 15 % en poids par rapport au poids total de la composition.

La teneur massique en alumine et/ou hydrate d'alumine est tout particulièrement d'au moins 35 % par rapport au poids total de la composition.

Une variante de la présente invention consiste en un procédé d'élimination de composés halogénés contenus dans un gaz ou dans un liquide, caractérisé en ce que l'on met en contact le gaz ou le liquide avec une composition à base d'une alumine et/ou un hydrate d'alumine telle que décrite précédemment, qui comprend, en outre, au moins un composé (B) comprenant au moins un élément choisi parmi les alcalins, les alcalino-terreux, et les terres rares.

Selon cette variante, la composition mise en oeuvre comprendra à la fois un ou plusieurs éléments dopants métalliques choisi parmi les métaux des groupes VIII, IB, et/ou IIB de la Classification Périodique, et un ou plusieurs éléments dopants alcalins, alcalino-terreux, et terres rares.

Les composés (B) servant à introduire dans l'alumine et/ou l'hydrate d'alumine au moins un élément choisi parmi les alcalins, les alcalino-terreux, et les terres-rares, peuvent être choisis parmi les composés organiques ou inorganiques. Ils sont choisis de préférence parmi les composés inorganiques.

Par composés inorganiques, on désigne plus particulièrement les sels inorganiques tels que par exemple les carbonates, les bicarbonates, les cyanures, les cyanates, les alcoxylates, les hydroxydes, et les nitrates.

Comme mentionné précédemment, les composés (B) comprennent au moins un élément choisi parmi les alcalins notamment le lithium, le sodium, le potassium, le rubidium, et le césium, les alcalino-terreux notamment le magnésium, le calcium, le strontium, le baryum, et les terres rares notamment le cérium, le praséodyme, et le lanthane.

Selon un mode de réalisation particulier de l'invention, les composés (B) sont choisis, de préférence, parmi les nitrates, les hydroxydes, les carbonates, et les bicarbonates de sodium et de potassium.

L'introduction des éléments alcalins, alcalino-terreux, et terres-rares sur ou dans l'alumine et/ou l'hydrate d'alumine, peut être réalisée par toute méthode connue de l'homme du métier et notamment telle que décrite ci-dessus.

Les composés (A) et (B) peuvent être ajoutés en amont, pendant et/ou après la mise en forme de l'alumine et/ou d'hydrate d'alumine.

Cependant, les composés (A) et (B) peuvent être introduits selon trois modes distincts.

Le premier mode, qui est le mode préféré, consiste à ce que l'on utilise une composition obtenue par introduction :

*i* - d'abord du ou des composés (B) dans l'alumine et/ou l'hydrate d'alumine de préférence par une imprégnation, suivi d'un traitement thermique effectué à une température supérieure ou égale à 100°C,
*ii* - ensuite du ou des composés (A) dans l'alumine et/ou l'hydrate d'alumine obtenue en (i) de préférence par une imprégnation, suivi d'un nouveau traitement thermique à une température supérieure ou égale à 100°C.

Plus particulièrement, selon ce premier mode on utilise une composition obtenue par introduction :

*i* - d'abord du ou des composés (B) dans l'alumine et/ou l'hydrate d'alumine de préférence par une imprégnation, suivi d'un traitement thermique effectué à une température comprise entre 200°C et 1200°C, et de préférence 300°C et 1000°C,
*ii* - ensuite du ou des composés (A) dans l'alumine et/ou l'hydrate d'alumine obtenue en (i) de préférence par une imprégnation, suivi d'un nouveau traitement thermique à une température comprise entre 150°C et 600°C, et de préférence entre 200°C et 550°C.

Le deuxième mode consiste à ce que l'on utilise une composition obtenue par introduction :

*i* - d'abord du ou des composés (A) dans l'alumine et/ou l'hydrate d'alumine de préférence par une imprégnation, suivie d'un premier traitement thermique à une température supérieure ou égale à 100°C,
*ii* - ensuite du ou des composés (B) dans l'alumine et/ou l'hydrate d'alumine obtenue en (i) de préférence par une imprégnation, suivie d'un traitement thermique effectué à une température supérieure ou égale à 100°C.

Plus particulièrement, selon ce deuxième mode on utilise une composition obtenue par introduction :

*i* - d'abord du ou des composés (A) dans l'alumine et/ou l'hydrate d'alumine de préférence par une imprégnation, suivie d'un premier traitement thermique à une température comprise entre 150°C et 600°C, et de préférence entre 200°C et 550°C,
*ii* - ensuite du ou des composés (B) dans l'alumine et/ou l'hydrate d'alumine obtenue en (i) de préférence par une imprégnation, suivie d'un traitement thermique effectué à une température comprise entre 200°C et 1200°C, et de préférence 250°C et 1000°C.

Le troisième mode consiste à ce que l'on utilise une composition obtenue par introduction simultanée des composés (A) et (B) dans l'alumine et/ou l'hydrate d'alumine de préférence par une imprégnation, suivie d'un traitement thermique effectué à une température supérieure ou égale à 100°C.

Plus particulièrement, selon ce troisième mode on utilise une composition obtenue par introduction simultanée des composés (A) et (B) dans l'alumine et/ou l'hydrate d'alumine de préférence par une imprégnation, suivie d'un traitement thermique effectué à une température comprise entre 150°C et 1200°C, et de préférence 200°C et 1000°C.

Il est possible de répéter les opérations d'introduction avec la même alumine et/ou l'hydrate d'alumine, et d'introduire successivement plusieurs composés (A), et le cas échéant plusieurs composés (B), dans la même alumine et/ou hydrate d'alumine.

Quel que soit le mode d'introduction choisi, la teneur globale massique en éléments alcalins, alcalino-terreux, et terres rares, est comprise entre 0,01 % et 50 % en poids, de préférence entre 0,1 % et 40 % en poids par rapport au poids total de la composition.

La teneur globale massique en éléments alcalins, alcalino-terreux, et terres rares, est avantageusement comprise entre 1 % et 40 % en poids , et plus particulièrement comprise entre 1,5 % et 25 % en poids par rapport au poids total de la composition.

La surface spécifique de la composition finale, indépendamment de la nature du ou des élément(s) dopant(s), est d'au moins 1 $m^2/g$, de préférence d'au moins 5 $m^2/g$, et encore plus préférentiellement supérieure à 15 $m^2/g$. Le procédé selon l'invention est plus particulièrement destiné à l'élimination de composés chlorés en général, et plus particulièrement à l'élimination d'HCl, présents dans un gaz ou un liquide.

Ainsi, de manière particulière, la composition finale est caractérisée en ce qu'elle comprend au plus 35 % d'éléments métalliques des groupes VIII, IB et IIB en teneur globale massique, et entre 1,5 et 25 % en poids d'alcalins, d'alcalins terreux et de terres rares par rapport au poids total de la composition.

Par ailleurs, d'une autre manière particulière, la composition finale est caractérisée en ce qu'elle comprend au plus 25 % d'éléments métalliques des groupes VIII, IB et IIB en teneur globale massique, et entre 1 et 40 % en poids d'alcalins, d'alcalino terreux et de terres rares par rapport au poids total de la composition.

Lorsque le procédé de l'invention intervient dans en aval d'un réformage catalytique régénératif ou de nouvelle génération, l'élimination d'HCI est accompagnée de la réduction substantielle et/ou la suppression de la formation des oligomères chlorés ou "huiles vertes", également présents dans le flux.

Comme décrit précédemment, en sortie de réformage catalytique, les effluents gazeux sont majoritairement composés d'hydrogène, d'hydrocarbures saturés, de traces d'hydrocarbures insaturés (dans le réformage catalytique régénératif), de traces de composés halogénés, et d'eau. Lorsque les effluents contiennent de l'eau, la teneur volumique en eau est en général comprise entre 1 et 50 ppm, à la pression de l'unité. Dans ces conditions, la teneur volumique en HCI, par exemple, est souvent comprise entre 0,2 et 30 ppm.

Le procédé selon l'invention convient aussi bien pour élimination de composés halogénés contenus dans un gaz ou un liquide exempt d'eau, que dans un gaz ou un liquide contenant de l'eau.

Par exempt d'eau, on entend une teneur en eau inférieure à 1 ppm, à la pression de l'unité.

Les exemples suivants illustrent l'invention, sans toutefois, en limiter sa portée.

## EXEMPLES

Préparation des échantillons

Le Tableau I décrit les différents échantillons (compositions) et récapitule leurs conditions de préparation.

L'alumine de l'échantillon 1 est un oxyde obtenu sans dopage, dont le taux de sodium résiduel s'explique par la matière première utilisée (hydrargillite), qui résulte du cycle Bayer.

Tous les autres échantillons (compositions) sont préparés par imprégnation dite à sec de l'alumine de l'échantillon 1. Le lot utilisé de l'alumine de l'échantillon 1 présente une surface spécifique de 349 $m^2$/g. Après l'imprégnation, un séchage est assuré à 100°C durant une nuit, puis survient une étape de calcination, à une température précisée dans le Tableau I. Sont également précisés dans le Tableau I, les précurseurs employés pour réaliser l'imprégnation de l'alumine.

Les échantillons 1 et 2 sont des échantillons comparatifs selon l'art antérieur.

Les échantillons 3 à 8 correspondent à des compositions selon l'invention.

Les échantillons 6 à 8 résultent d'une première imprégnation de sodium, suivie d'une calcination à une température de 400°C (composition 6) ou de 820°C (échantillons 7 et 8) ; suit alors une imprégnation de fer.

Tableau I :

| Echantillons étudiés et leur mode de préparation | | | | | |
|---|---|---|---|---|---|
| Echantillon | Elément dopant | Précurseur (s) | Teneurs massiques | Traitement thermique (°C) | Surface spécifique ($m^2$/g)[a] |
| 1(comparatif) | - | - | 0,2 % Na | - | 349 |
| 2(comparatif) | Na | NaOH | 6,7 % Na | 400 | 147 |
| 3 | Zn | $Zn(NO_3)_2$ | 14,6% Zn | 350 | 206 |
| 4 | Cu | $Cu(NO_3)_2$ | 14,1 % Cu | 350 | 239 |
| 5 | Fe | $Fe(NO_3)_3$ | 6,8 % Fe | 350 | 191 |
| 6 | Na/Fe | NaOH | 6,7 % Na | 400 | 132 |
| | | $Fe(NO_3)_3$ | 4,9 % Fe | 350 | |
| 7 | Na/Fe | NaOH | 7,0 Na | 820 | 85 |
| | | $Fe(NO_3)_3$ | 0,8 % Fe | 350 | |
| 8 | Na/Fe | $NaNO_3$ | 6,7 % Na | 820 | 86 |
| | | $Fe(NO_3)_3$ | 2,8 % Fe | 350 | |

[a] Surface de la composition finale

Coadsorption HCl + $H_2O$

Les expériences d'adsorption d'HCl sont conduites dans une balance maintenue en permanence sous flux gazeux avec l'hélium comme gaz vecteur, sous pression atmosphérique.

A l'hélium (320 ml/min) est ajouté un mixte HCl-$H_2O$ (respectivement 9400 - 500 ppm).

L'échantillon placé dans la balance, à la hauteur de 280 mg, est prétraité, sous l'hélium sec, à 300°C durant 2 heures. L'expérience en elle-même peut commencer après retour et maintien de la température à 30°C.

| Le Tableau II récapitule les résultats obtenus. L'étude des échantillons (compositions) est effectuée au bout d'un temps d'expérience de 200 heures. **Tableau II Echantillons** | Coadsorption HCl + H$_2$O [a] | |
|---|---|---|
| | HCl + H$_2$O (%) | HCl Dosé (%) |
| 1 | 16 | 11,3 |
| 2 | 22 | 15,6 |
| 3 | 23 | 17,6 |
| 4 | 24 | 18,5 |
| 5 | 28,5 | 17,7 |
| 6 | 25 | 20,7 |
| 7 | 25,5 | 21,0 |
| 8 | 27 | 23,5 |

[a] *Dans le cas d'une coadsorption, la reprise de masse notée est due à la fois à de la captation d'HCl et à de l'adsorption d'eau.*

Coadsorption HCl + H$_2$O et détection des "huiles vertes" ou "qreen oils"

En ce qui concerne la formation des "green oils" ou "huiles vertes", un mode opératoire particulier a été mis au point afin de détecter, à partir de propylène, la formation d'organochlorés, dans un premier temps de chloropropane, sur plusieurs compositions étudiées.

Pour ce faire, 10 g de la composition étudiée sont placés durant 24 heures dans un réacteur maintenu à 50°C, à travers lequel circule, en boucle fermée, de l'hydrogène contenant 2 % de propylène, et 12 mmoles d'HCl.

Un examen de la phase gazeuse est fait in situ par infrarouge (bande à 1300 cm$^{-1}$) et un dosage par spectrométrie de masse permet de suivre l'apparition éventuelle de chloropropane.

Dans ces conditions, alors que du chloropropane est formé lorsque les échantillons 1 et 2 sont utilisés, il n'en est pas de même pour les échantillons 5, 6, et 8.

Au bout de 4 heures d'expérience, la capacité d'adsorption d'HCl mesurée par infrarouge, affichée par l'échantillon 6, est de 34 %.

Une expérience complémentaire a alors été assurée, dans les mêmes conditions opératoires, mais avec seulement 8 mmoles d'HCl.

L'échantillon 8 présente une capacité d'adsorption d'HCl, au bout de 48 heures d'expérience, de 26 % (dosage par infrarouge).

**Revendications**

1. Procédé d'élimination de composés halogénés contenus dans un gaz ou dans un liquide, **caractérisé en ce que** l'on met en contact le gaz ou le liquide avec une composition à base d'une alumine obtenue par déshydratation rapide d'un hydrate d'alumine résultant du cycle Bayer et ayant une surface spécifique d'au moins 30 m$^2$/g et/ou d'un hydrate d'alumine résultant du cycle Bayer sur laquelle/lequel est déposé(e) au moins un composé (A) comprenant au moins un élément métallique choisi parmi les métaux des groupes VIII, IB, et/ou IIB de la Classification Périodique, à une teneur globale massique en élément(s) métallique(s) d'au plus 45 % en poids par rapport au poids total de la composition, la teneur globale massique de l'alumine et/ou de l'hydrate d'alumine étant d'au moins 35 % en poids par rapport au poids total de la composition.

2. Procédé selon la revendication 1 **caractérisé en ce que** le complément en poids de la composition comprenant au moins un élément métallique choisi parmi les métaux des groupes VIII, IB, et/ou IIB de la Classification Périodique, à une teneur globale massique en éléments(s) métallique(s) d'au plus 45 % en poids par rapport au poids total de la composition, comprend en majeure partie une alumine obtenue par déshydratation rapide d'un hydrate d'alumine résultant du cycle Bayer et/ou un hydrate d'alumine résultant du cycle Bayer.

**3.** Procédé selon l'une des revendications 1 à 2, **caractérisé en ce que** le composé (A) comprend au moins un élément métallique choisi parmi les métaux :

- du groupe VIII : le fer et le nickel,
- du groupe IB : le cuivre, et
- du groupe IIB : le zinc.

**4.** Procédé selon l'une des revendications 1 à 3 **caractérisé en ce** le composé (A) comprend au moins un élément métallique du groupe VIII.

**5.** Procédé selon l'une quelconque des revendications 1 à 4, **caractérisé en ce que** l'on utilise une alumine obtenue par déshydratation rapide d'un hydrate d'alumine résultant du cycle Bayer et/ou un hydrate d'alumine résultant du cycle Bayer, qui après l'introduction d'au moins un composé (A) est traitée thermiquement à une température d'au moins 100°C.

**6.** Procédé selon la revendication 5, **caractérisé en ce que** le traitement thermique s'effectue à une température comprise entre 150°C et 600°C, et de préférence entre 200°C et 550°C.

**7.** Procédé selon l'une quelconque des revendications 1 à 6, **caractérisé en ce que** la teneur globale massique de l'élément ou des éléments métalliques est d'au plus 35 % en poids, et plus particulièrement d'au plus 25 % en poids par rapport au poids total de la composition.

**8.** Procédé selon l'une quelconque des revendications 1 à 7, **caractérisé en ce que** la teneur globale massique de l'élément ou des éléments métalliques dans la composition est d'au moins 0,005 % (50 ppm) en poids, et de préférence d'au moins 0,5 % en poids par rapport au poids total de la composition, l'élément métallique n'étant pas le fer.

**9.** Procédé selon l'une quelconque des revendications 1 à 8, **caractérisé en ce que** dans le cas où l'un au moins des éléments métalliques est le fer, la teneur globale massique en fer est d'au moins 0,1% en poids, de préférence 0,5 % en poids, et encore plus préférentiellement d'au moins 0,7 % en poids par rapport au poids total de la composition.

**10.** Procédé selon l'une quelconque des revendications 1 à 9, **caractérisé en ce que** la teneur globale massique de l'élément ou des éléments métalliques est incluse entre 0,5 % et 20 % en poids, et plus particulièrement comprise entre 0,7 % et 15 % en poids par rapport au poids total de la composition.

**11.** Procédé selon l'une quelconque des revendications 1 à 10, **caractérisé en ce que** l'on met en contact le gaz ou le liquide avec une composition à base d'une alumine obtenue par déshydratation rapide d'un hydrate d'alumine résultant du cycle Bayer et/ou un hydrate d'alumine résultant du cycle Bayer, qui comprend, en outre, au moins un composé (B) comprenant au moins un élément choisi parmi les alcalins, les alcalino-terreux, et les terres-rares.

**12.** Procédé selon la revendication 11, **caractérisé en ce que** le composé (B) comprend au moins un élément choisi parmi le sodium, le potassium, le rubidium, le césium, le magnésium, le calcium, le strontium, le baryum, le cérium, le praséodyme, et le lanthane.

**13.** Procédé selon l'une quelconque des revendications 1 à 12, **caractérisé en ce que** l'on utilise une composition obtenue par introduction :

*i* - d'abord du ou des composés (B) dans l'alumine et/ou l'hydrate d'alumine de préférence par une imprégnation, suivie d'un traitement thermique effectué à une température supérieure ou égale à 100°C,
*ii* - ensuite du ou des composés (A) dans l'alumine et/ou l'hydrate d'alumine obtenue en (i) de préférence par une imprégnation, suivie d'un nouveau traitement thermique à une température supérieure ou égale à 100°C.

**14.** Procédé selon la revendication 13, **caractérisé en ce que** l'on utilise une composition obtenue par introduction :

*i* - d'abord du ou des composés (B) dans l'alumine et/ou l'hydrate d'alumine de préférence par une imprégnation, suivie d'un traitement thermique effectué à une température comprise entre 200°C et 1200°C, et de préférence 300°C et 1000°C,

EP 0 948 995 B1

*ii* - ensuite du ou des composés (A) dans l'alumine et/ou l'hydrate d'alumine obtenue en (i) de préférence par une imprégnation, suivie d'un nouveau traitement thermique à une température, comprise entre 150°C et 600°C, et de préférence entre 200°C et 550°C.

**15.** Procédé selon l'une quelconque des revendications 1 à 12, **caractérisé en ce que** l'on utilise une composition obtenue par introduction :

*i* - d'abord du ou des composés (A) dans l'alumine et/ou l'hydrate d'alumine de préférence par une imprégnation, suivie d'un premier traitement thermique à une température supérieure ou égale à 100°C,
*ii* - ensuite du ou des composés (B) dans l'alumine et/ou l'hydrate d'alumine obtenue en (i) de préférence par une imprégnation, suivie d'un traitement thermique effectué à une température supérieure ou égale à 100°C.

**16.** Procédé selon la revendication 15, **caractérisé en ce que** l'on utilise une composition obtenue par introduction :

*i* - d'abord du ou des composés (A) dans l'alumine et/ou l'hydrate d'alumine de préférence par une imprégnation, suivie d'un premier traitement thermique à une température comprise entre 150°C et 600°C, et de préférence entre 200°C et 550°C,
*ii* - ensuite du ou des composés (B) dans l'alumine et/ou l'hydrate d'alumine obtenue en (i) de préférence par une imprégnation, suivie d'un traitement thermique effectué à une température comprise entre 200°C et 1200°C, et de préférence 250°C et 1000°C.

**17.** Procédé selon l'une quelconque des revendications 1 à 12, **caractérisé en ce que** l'on utilise une composition obtenue par introduction simultanée des composés (A) et (B) dans l'alumine et/ou l'hydrate d'alumine de préférence par imprégnation, suivi d'un traitement thermique effectué à une température supérieure ou égale à 100°C

**18.** Procédé selon la revendication 17, **caractérisé en ce que** le traitement thermique est effectué à une température comprise entre 150°C et 1200°C, et de préférence 200°C et 1000°C.

**19.** Procédé selon l'une quelconque des revendications 1 à 18, **caractérisé en ce que** la teneur globale massique en éléments alcalins, alcalino-terreux, et terres rares, est comprise entre 0,01 % et 50 % en poids, de préférence entre 0,1 % et 40 % en poids par rapport au poids total de la composition.

**20.** Procédé selon la revendication 19, **caractérisé en ce que** la teneur globale massique en éléments alcalins, alcalino-terreux, et terres rares, est comprise entre 1 % et 40 % en poids, et plus particulièrement entre 1,5 % et 25 % en poids par rapport au poids total de la composition.

**21.** Procédé selon l'une des revendications 19 ou 20, **caractérisé en ce que** la teneur globale massique en éléments métalliques des groupes VIII, IB et IIB est d'au plus 35 % et **en ce que** la teneur globale massique en éléments alcalins, alcalino-terreux et terres rares est comprise entre 1,5 et 25 % en poids par rapport au poids total de la composition.

**22.** Procédé selon l'une des revendications 19 ou 20, **caractérisé en ce que** la teneur globale massique en éléments métalliques des groupes VIII, IB et IIB est d'au plus 25 % et **en ce que** la teneur globale massique en éléments alcalins, alcalino-terreux et terres rares est comprise entre 1 et 40 % en poids par rapport au poids total de la composition.

**23.** Procédé selon l'une quelconque des revendications 1 à 22 **caractérisé en ce que** le gaz et/ou le liquide mis en contact avec la composition, est exempt d'eau.

**24.** Procédé selon l'une quelconque des revendications 1 à 23, **caractérisé en ce que** le gaz et/ou le liquide mis en contact avec la composition, contient de l'eau.

**25.** Procédé d'élimination de composés halogénés contenus dans un gaz ou dans un liquide selon l'une quelconque des revendications 1 à 24 **caractérisé en ce que** le liquide ou le gaz proviennent d'un réformage catalytique classique et/ou du type régénératif ou de nouvelle génération.

**26.** Procédé d'élimination de composés halogénés contenus dans un gaz ou dans un liquide selon l'une quelconque des revendications 1 à 25, **caractérisé en ce que** lesdits composés halogénés sont des composés chlorés.

**Patentansprüche**

1.  Verfahren zur Entfernung von Halogenverbindungen, die in einem Gas oder in einer Flüssigkeit enthalten sind, **dadurch gekennzeichnet, dass** man das Gas oder die Flüssigkeit mit einer Zusammensetzung auf Basis von Aluminiumoxid kontaktiert, das durch schnelle Dehydratisierung eines Aluminiumoxidhydrats erhalten wird, das aus dem Bayer-Zyklus resultiert und eine spezifische Oberfläche von wenigstens 30 m$^2$/g hat und/oder einem Aluminiumoxidhydrat, das aus dem Bayer-Zyklus resultiert, auf dem wenigstens eine Verbindung (A) abgeschieden ist, die wenigstens ein metallisches Element umfasst, das gewählt ist unter den Metallen der Gruppen VIII, IB und/oder IIB des Periodensystems mit einem Gesamtmassegehalt an metallischem Element(en) von wenigstens 45 Gew.-% im Verhältnis zum Gesamtgewicht der Zusammensetzung, wobei der Gesamtmassegehalt des Aluminiumoxids und/oder des Aluminiumoxidhydrats wenigstens 35 Gew.-% im Verhältnis zum Gesamtgewicht der Zusammensetzung ist.

2.  Verfahren nach Anspruch 1, **dadurch gekennzeichnet, dass** die Vervollständigung an Gewicht der Zusammensetzung, welche wenigstens ein metallisches Element umfasst, das gewählt ist unter den Metallen der Gruppen VIII, IB und/oder IIB des Periodensystems mit einem Massegehalt an metallischem Element(en) von höchstens 45 Gew.-% im Verhältnis zum Gesamtgewicht der Zusammensetzung, zum größeren Teil ein Aluminiumoxid umfasst, das durch schnelle Dehydratisierung eines Aluminiumoxidhydrats erhalten wird, das aus dem Bayer-Zyklus resultiert und/oder einem Aluminiumoxidhydrat, das aus dem Bayer-Zyklus resultiert.

3.  Verfahren nach einem der Ansprüche 1 bis 2, **dadurch gekennzeichnet, dass** die Verbindung (A) wenigstens ein metallisches Element umfasst, das gewählt ist unter den Metallen:

    -   der Gruppe VIII: Eisen und Nickel,

    -   der Gruppe IB: Kupfer und

    -   der Gruppe IIB: Zink.

4.  Verfahren nach einem der Ansprüche 1 bis 3, **dadurch gekennzeichnet, dass** die Verbindung (A) wenigstens ein metallisches Element der Gruppe VIII umfasst.

5.  Verfahren nach einem der Ansprüche 1 bis 4, **dadurch gekennzeichnet, dass** man ein Aluminiumoxid verwendet, das durch schnelle Dehydratation eines Aluminiumoxidhydrats erhalten wird, das aus dem Bayer-Zyklus resultiert und/oder einem Aluminiumoxidhydrat, das aus dem Bayer-Zyklus resultiert, welches nach Einführen von wenigstens einer Verbindung (A) thermisch bei einer Temperatur von wenigstens 100°C behandelt wird.

6.  Verfahren nach Anspruch 5, **dadurch gekennzeichnet, dass** die thermische Behandlung bei einer Temperatur zwischen 150°C und 600°C und vorzugsweise zwischen 200°C und 550°C geschieht.

7.  Verfahren nach einem der Ansprüche 1 bis 6, **dadurch gekennzeichnet, dass** der Gesamtmassegehalt des metallischen Elements oder Elemente wenigstens 35 Gew.-% und spezieller höchstens 25 Gew.-% im Verhältnis zum Gesamtgewicht der Zusammensetzung beträgt.

8.  Verfahren nach einem der Ansprüche 1 bis 7, **dadurch gekennzeichnet, dass** der Gesamtmassegehalt des metallischen Elements oder Elemente in der Zusammensetzung wenigstens 0,005 Gew.-% (50 ppm) und vorzugsweise wenigstens 0,5 Gew.-% im Verhältnis zum Gesamtgewicht der Zusammensetzung beträgt, wobei das metallische Element nicht Eisen ist.

9.  Verfahren nach einem der Ansprüche 1 bis 8, **dadurch gekennzeichnet, dass** in dem Fall, wo wenigstens eines der metallischen Elemente Eisen ist, der Gesamtmassegehalt an Eisen wenigstens 0,1 Gew.-%, vorzugsweise 0,5 Gew.-% und noch bevorzugter wenigstens 0,7 Gew.-% im Verhältnis zum Gesamtgewicht der Zusammensetzung beträgt.

10. Verfahren nach einem der Ansprüche 1 bis 9, **dadurch gekennzeichnet, dass** der Gesamtmassegehalt des metallischen Elements oder Elemente zwischen 0,5 Gew.-% und 20 Gew.-% eingeschlossen ist und spezieller zwischen 0,7 Gew.-% und 15 Gew.-% im Verhältnis zum Gesamtgewicht der Zusammensetzung liegt.

11. Verfahren nach einem der Ansprüche 1 bis 10, **dadurch gekennzeichnet, dass** man das Gas oder die Flüssigkeit mit einer Zusammensetzung auf Basis von Aluminiumoxid kontaktiert, das durch schnelle Dehydratation eines Aluminiumoxidhydrats erhalten wird, das aus dem Bayer-Zyklus resultiert und/oder eines Aluminiumoxidhydrats, das aus dem Bayer-Zyklus resultiert, welches außerdem wenigstens eine Verbindung (B) umfasst, die wenigstens ein Element umfasst, das gewählt ist unter den Alkalimetallen, den Erdalkalimetallen und den Seltenerden.

12. Verfahren nach Anspruch 11, **dadurch gekennzeichnet, dass** die Verbindung (B) wenigstens ein Element umfasst, das gewählt ist unter Natrium, Kalium, Rubidium, Cäsium, Magnesium, Kalzium, Strontium, Barium, Cer, Präsodym und Lanthan.

13. Verfahren nach einem der Ansprüche 1 bis 12, **dadurch gekennzeichnet, dass** man eine Zusammensetzung verwendet, erhalten durch Einführen von:

> i - zuerst der Verbindung oder Verbindungen (B) in das Aluminiumoxid und/oder Aluminiumoxidhydat, vorzugsweise durch ein Imprägnieren, gefolgt von einer thermischen Behandlung, die bei einer Temperatur oberhalb oder gleich 100°C durchgeführt wird,
> ii - anschließend der Verbindung oder Verbindungen (A) in das Aluminiumoxid und/oder das Aluminiumoxidhydrat, das bei (i) erhalten wird, vorzugsweise durch Imprägnieren, gefolgt von einer erneuten thermischen Behandlung bei einer Temperatur oberhalb oder gleich 100°C.

14. Verfahren nach Anspruch 13, **dadurch gekennzeichnet, dass** man eine Zusammensetzung verwendet, erhalten durch Einführen von:

> i - zuerst der Verbindung oder Verbindungen (B) in das Aluminiumoxid und/oder das Aluminiumoxidhydrat, vorzugsweise durch ein Imprägnieren, gefolgt von einer thermischen Behandlung, die man bei einer Temperatur durchführt, die zwischen 200°C und 1200°C liegt und vorzugsweise 300°C und 1000°C,
>
> ii - anschließend der Verbindung oder Verbindungen (A) in das Aluminiumoxid und/oder das Aluminiumoxidhydrat, das in (i) erhalten wird, vorzugsweise durch ein Imprägnieren, gefolgt von einer erneuten thermischen Behandlung bei einer Temperatur, die zwischen 150°C und 600°C und vorzugsweise zwischen 200°C und 550°C liegt.

15. Verfahren nach einem der Ansprüche 1 bis 12, **dadurch gekennzeichnet, dass** man eine Zusammensetzung verwendet, erhalten durch Einführen von:

> i - zuerst der Verbindung oder Verbindungen (A) in das Aluminiumoxid und/oder das Aluminiumoxidhydrat, vorzugsweise durch ein Imprägnieren, gefolgt von einer ersten thermischen Behandlung bei einer Temperatur oberhalb oder gleich 100°C,
>
> ii - anschließend der Verbindung oder Verbindungen (A) in das Aluminiumoxid und/oder das Aluminiumoxidhydrat, das bei (i) erhalten wird, vorzugsweise durch ein Imprägnieren, gefolgt von einer thermischen Behandlung, die bei einer Temperatur, oberhalb oder gleich 100°C durchgeführt wird.

16. Verfahren nach Anspruch 15, **dadurch gekennzeichnet, dass** man eine Zusammensetzung verwendet, erhalten durch Einführen von:

> i - zuerst der Verbindung oder Verbindungen (A) in das Aluminiumoxid und/oder das Aluminiumoxidhydrat, vorzugsweise durch ein Imprägnieren, gefolgt von einer ersten thermischen Behandlung bei einer Temperatur zwischen 150°C und 600°C und vorzugsweise zwischen 200°C und 550°C,
>
> ii - anschließend der Verbindung oder Verbindungen (B) in das Aluminiumoxid und/oder das Aluminiumoxidhydrat, das in (i) erhalten wird, vorzugsweise durch ein Imprägnieren, gefolgt von einer thermischen Behandlung, durchgeführt bei einer Temperatur zwischen 200°C und 1200°C und vorzugsweise zwischen 250°C und 1000°C.

17. Verfahren nach einem der Ansprüche 1 bis 12, **dadurch gekennzeichnet, dass** man eine Zusammensetzung verwendet, die man durch gleichzeitiges Einführen der Verbindungen (A) und (B) in das Aluminiumoxid und/oder das Aluminiumoxidhydrat erhält, vorzugsweise durch Imprägnieren, gefolgt von einer thermischen Behandlung,

**EP 0 948 995 B1**

die man bei einer Temperatur oberhalb oder gleich 100°C durchführt.

18. Verfahren nach Anspruch 17, **dadurch gekennzeichnet, dass** die thermische Behandlung bei einer Temperatur zwischen 150°C und 1200°C und vorzugsweise zwischen 200°C und 1000°C durchgeführt wird.

19. Verfahren nach einem der Ansprüche 1 bis 18, **dadurch gekennzeichnet, dass** der Gesamtmassegehalt an Alkalimetall-, Erdalkalimetall- und Seltenerdelementen zwischen 0,01 Gew.-% und 50 Gew.-%, vorzugsweise zwischen 0,1 Gew.-% und 40 Gew.-% im Verhältnis zum Gesamtgewicht der Zusammensetzung liegt.

20. Verfahren nach Anspruch 19, **dadurch gekennzeichnet, dass** der Gesamtmassegehalt an Alkali-, Erdalkali- und Seltenerdelementen zwischen 1 Gew.-% und 40 Gew.-% und spezieller zwischen 1,5 Gew.-% und 25 Gew.-% im Verhältnis zum Gesamtgewicht der Zusammensetzung liegt.

21. Verfahren nach einem der Ansprüche 19 oder 20, **dadurch gekennzeichnet, dass** der Massegehalt an metallischen Element der Gruppen VIII, IB und IIB höchstens 35% ist und **dadurch**, dass der Gesamtmassegehalt an Alkalimetall-, Erdalkalimetall- und Seltenerdelementen zwischen 1,5 und 25 Gew.-% im Verhältnis zum Gesamtgewicht der Zusammensetzung liegt.

22. Verfahren nach einem der Ansprüche 19 oder 20, **dadurch gekennzeichnet, dass** der Gesamtmassegehalt an Metallelementen der Gruppen VIII, IB und IIB höchstens 25% beträgt und **dadurch**, dass der Gesamtmassegehalt an Alkalimetall-, Erdalkalimetall- und Seltenerdelementen zwischen 1 und 40 Gew.-% im Verhältnis zum Gesamtgewicht der Zusammensetzung liegt.

23. Verfahren nach einem der Ansprüche 1 bis 22, **dadurch gekennzeichnet, dass** das Gas und/oder die Flüssigkeit, welche man mit der Zusammensetzung in Kontakt bringt, wasserfrei sind.

24. Verfahren nach einem der Ansprüche 1 bis 23, **dadurch gekennzeichnet, dass** das Gas und/oder die Flüssigkeit, welche man mit der Zusammensetzung kontaktiert, Wasser enthalten.

25. Verfahren zum Entfernen von Halogenverbindungen, die in einem Gas oder in einer Flüssigkeit enthalten sind, nach einem der Ansprüche 1 bis 24, **dadurch gekennzeichnet, dass** die Flüssigkeit oder das Gas von einem klassischen katalytischen Reformieren und/oder vom regenerativen Typ oder zur Neuerzeugung kommt.

26. Verfahren zur Entfernung von Halogenverbindungen, die in einem Gas oder einer Flüssigkeit enthalten sind, nach einem der Ansprüche 1 bis 25, **dadurch gekennzeichnet, dass** die Halogenverbindungen chlorierte Verbindungen sind.

**Claims**

1. A process for eliminating halogen-containing compounds contained in a gas or a liquid, **characterized in that** the gas or liquid is brought into contact with a composition based on an alumina obtained by rapid dehydration of a hydrated alumina from Bayer cycle and having a specific surface area of at least 30 $m^2$/g and/or a hydrated alumina from Bayer cycle on which is deposited at least one compound (A) comprising at least one metallic element selected from metals from groups VIII, IB and/or IIB of the periodic table, and **in that** the total metallic element(s) weight content is at most 45% by weight with respect to the total composition weight, the content of alumina and/or hydrated alumina being at least 35% by weight with respect to the total composition weight.

2. A process according to claim 1 **characterized in that** the complement by weight of the composition comprising at least one metallic element selected from metals from groups VIII, IB and/or IIB of the periodic table, with a total metallic element(s) weight being at most 45 %, comprises in a major part alumina obtained by rapid dehydration of a hydrated alumina from Bayer cycle and/or hydrated alumina from the Bayer cycle.

3. Process according to claim 1 or claim 2, **characterized in that** compound (A) comprises at least one metallic element selected from the following metals:

   - group VIII: iron and nickel;
   - group IB: copper; and

- group IIB: zinc.

4.  Process according to anyone of claims 1 to 3 **characterized in that** the compound (A) comprises at least one metallic element from group VIII.

5.  A process according to anyone of claim 1 to claim 4, **characterized in that** an alumina obtained by rapid dehydration of a hydrated alumina from the Bayer cycle and/or a hydrated alumina from the Bayer cycle is used, which is heat treated at a temperature of at least 100°C after introducing at least one compound (A).

6.  A process according to claim 5, **characterized in that** the heat treatment is carried out at a temperature in the range 150°C to 600°C, preferably in the range 200°C to 550°C.

7.  A process according to any one of claims 1 to 6, **characterized in that** the total weight content of the metallic element or elements is at most 35% by weight, and more particularly at most 25% by weight with respect to the total composition weight.

8.  A process according to any one of claims 1 to 7, **characterized in that** the total weight content of the metallic element or elements in the composition is at least 0.005% (50 ppm) by weight, preferably at least 0.5% by weight with respect to the total composition weight, the metallic element not being iron.

9.  A process according to any one of claims 1 to 8, **characterized in that** when at least one of the metallic elements is iron, the total iron weight content is at least 0.1 % by weight, preferably 0.5% by weight, and more preferably at least 0.7% by weight with respect to the total composition weight.

10. A process according to any one of claims 1 to 9, **characterized in that** the total metallic element or elements weight content is in the range 0.5% to 20% by weight, and more particularly in the range 0.7% to 15% by weight with respect to the total composition weight.

11. A process according to any one of claims 1 to 10 **characterized in that** the gas or liquid is brought into contact with a composition based on an alumina obtained by rapid dehydration of a hydrated alumina from Bayer cycle and/or a hydrated alumina from Bayer cycle, which also comprises at least one compound (B) comprising at least one element selected from alkalis, alkali-earth and rare earth elements.

12. A process according to claim 11, **characterized in that** compound (B) comprises at least one element selected from sodium, potassium, rubidium, caesium, magnesium, calcium, strontium, barium, cerium, praseodymium and lanthanum.

13. A process according to any one of claims 1 to 12, **characterized in that** the composition used is obtained by introducing:

    i) firstly, compound or compounds (B) into the alumina and/or hydrated alumina, preferably by impregnation, followed by heat treatment carried out at a temperature of 100°C or more;
    ii) then compound or compounds (A) into the alumina and/or hydrated alumina obtained from i), preferably by impregnation, followed by a fresh heat treatment carried out at a temperature of 100°C or more.

14. A process according to claim 13, **characterized in that** the composition used is obtained by introducing:

    i) firstly, compound or compounds (B) into the alumina and/or hydrated alumina, preferably by impregnation, followed by heat treatment carried out at a temperature in the range 200°C to 1200°C, preferably in the range 300°C to 1000°C;
    ii) then compound or compounds (A) into the alumina and/or hydrated alumina obtained from i), preferably by impregnation, followed by a fresh heat treatment carried out at a temperature in the range 150°C to 600°C, preferably in the range 200°C to 550°C.

15. A process according to any one of claims 1 to 12, **characterized in that** the composition used is obtained by introducing:

    i) firstly, compound or compounds (A) into the alumina and/or hydrated alumina, preferably by impregnation, followed by a first heat treatment carried out at a temperature of 100°C or more;

ii) then compound or compounds (B) into the alumina and/or hydrated alumina obtained from i), preferably by impregnation, followed by a heat treatment carried out at a temperature of 100°C or more.

**16.** A process according to claim 15, **characterized in that** the composition used is obtained by introducing:

i) firstly, compound or compounds (A) into the alumina and/or hydrated alumina, preferably by impregnation, followed by a first heat treatment carried out at a temperature in the range 150°C to 600°C, preferably in the range 200°C to 550°C;

ii) then compound or compounds (B) into the alumina and/or hydrated alumina obtained from i), preferably by impregnation, followed by a heat treatment carried out at a temperature in the range 200°C to 1200°C, preferably in the range 250°C to 1000°C.

**17.** A process according to any one of claims 1 to 12, **characterized in that** a composition obtained by simultaneous introduction of compounds (A) and (B) into the alumina and/or hydrated alumina is used, preferably by impregnation, followed by heat treatment carried out at a temperature of 100°C or more.

**18.** A process according to claim 17, **characterized in that** the heat treatment is carried out at a temperature in the range 150°C to 1200°C, preferably in the range 200°C to 1000°C.

**19.** A process according to any one of claims 1 to 18, **characterized in that** the total content of the alkali, alkaline-earth and rare earth elements is in the range 0.01% to 50% by weight, preferably in the range 0.1% to 40% by weight, with respect to the total composition weight.

**20.** A process according to claim 19, **characterized in that** the total weight content of the alkali, alkaline-earth and rare earth elements is in the range 1% to 40% by weight, more particularly in the range 1.5% to 25% by weight, with respect to the total composition weight.

**21.** A Process according to claim 19 or claim 20 **characterized in that** the total content in metallic element selected from metals from groups VIII, IB and/or IIB is at most 35 % by weight and the total content of the alkali, alkaline-earth and rare earth elements is in the range 1.5 % to 25 % by weight, with respect to the total composition weight.

**22.** A Process according to claim 19 or claim 20 **characterized in that** the total content in metallic element selected from metals from groups VIII, IB and/or IIB is at most 25 % by weight and the total content of the alkali, alkaline-earth and rare earth elements is in the range 1 % to 40 % by weight, with respect to the total composition weight.

**23.** A process according to any one of claims 1 to 22, **characterized in that** the gas and/or liquid brought into contact with the composition is free of water.

**24.** A process according to any one of claims 1 to 23, **characterized in that** the gas and/or liquid brought into contact with the composition contains water.

**25.** A process for eliminating halogen-containing compounds contained in a gas or a liquid according to any one of claims 1 to 24, **characterized in that** the liquid or gas originates from a conventional catalytic reforming process and/or a regenerative type process or from new generation.

**26.** A process for eliminating halogen-containing compounds contained in a gas or a liquid according to any one of claims 1 to 25, **characterized in that** said halogen-containing compounds are chlorine-containing compounds.